# FASCICULE DE BREVET EUROPEEN

(11) **EP 0 591 077 B1**
(45) Date de publication et mention de la délivrance du brevet: **08.01.1997**
(21) Numéro de dépôt: 93430012.0
(22) Date de dépôt: 22.09.1993
(51) Int. Cl.: C04B 41/00, C04B 28/10, E04G 23/08

(54) **Agent de démolition pour briser les structures en matériaux cassants par effet de gonflement**
Expansionsfähiges Zertrümmerungsmittel zum Abbruck zerbrechlicher Materialien
Expansive demolition agent for demolishing brittle structures

(30) Priorité: 02.10.1992 FR 9212256
(43) Date de publication de la demande: 06.04.1994
(73) Titulaire: EXPLOSIFS ET PRODUITS CHIMIQUES S.A., F-75008 Paris (FR)
(72) Inventeur: Gniewek, Joseph, F-69100 Villeurbanne (FR)
(74) Mandataire: Somnier, Jean-Louis

(56) Documents cités:
- EP-A- 0 130 608
- DD-A- 221 992
- FR-A- 2 517 988
- CHEMICAL ABSTRACTS, vol. 107, no. 14, 5 Octobre 1987, Columbus, Ohio, US; abstract no. 120129y, Z.WANG ET AL. 'Controlled static shattering agents'
- CHEMICAL ABSTRACTS, vol. 107, no. 14, 5 Octobre 1987, Columbus, Ohio, US; abstract no. 120165g,
- CHEMICAL ABSTRACTS, vol. 114, no. 18, 6 Mai 1991, Columbus, Ohio, US; abstract no. 170109g,
- CHEMICAL ABSTRACTS, vol. 107, no. 14, 5 Octobre 1987, Columbus, Ohio, US; abstract no. 120165g, & JP-A-62149783

## Description

La présente invention a pour objet un agent de démolition pour briser les structures en matériaux cassants par effet de gonflement.

Le secteur technique de l'invention est le domaine de la démolition des structures, naturelles ou construites en matériau dur.

L'application principale d'un agent de démolition suivant l'invention est de briser des roches et des structures notamment en béton par effet de gonflement de cet agent, qui est coulé dans des trous percés dans le matériau à briser, et qui, en se dilatant, exerce sur les parois du trou une poussée suffisamment puissante pour provoquer la fissuration de ce matériau et sa fragmentation.

On connaît en effet à ce jour deux méthodes principales, utilisées depuis longtemps, de démolition :
- l'une par explosifs, dont les nuisances sont nombreuses, tel que le bruit, le risque de projection d'éclats du matériau, les problèmes de sécurité, non seulement dus à l'onde de l'explosion et à ses projections, mais aussi à la brutalité de l'effondrement des structures, et la production de gaz toxiques suivant l'explosif utilisé; de plus, cette méthode nécessite du personnel de mise en oeuvre qualifié et habilité, justement à cause des nuisances et des risques ci-dessus.
   Dans cette méthode, parmi les systèmes récemment développés, on note la demande de brevet EP 109.067 déposée par FRIED-KRUPP le 11 Novembre 1983 sous priorité allemande et concernant "un procédé pour casser du matériau compact dur, et dispositif pour sa mise en oeuvre", utilisant un liquide introduit dans des trous forés dans le matériau, avec un explosif et un détonateur qui est mis à feu, et provoque un coup de bélier dans le liquide, caractérisé par un réflecteur d'impulsions fermant le trou d'explosion.
- l'autre méthode par moyens mécaniques, qui comporte moins de risques que la précédente, mais qui engendre également des nuisances tel que le bruit, mais aussi des vibrations transmises à l'environnement. De plus cette méthode peut nécessiter la mise en oeuvre de gros engins, quand les structures à démolir sont importantes : ces engins sont en général d'un coût élevé et peuvent avoir des problèmes d'accès.

Dans cette deuxième méthode, on relève de nombreuses demandes de brevets déposées, tels que les brevets suisse CH. 230.788 du 15 Juin 1988 sur une "pièce pour démolir des constructions, en particulier des murs en béton armé", ou autrichien AT. 65.484 du 28 Février 1984 sur un "outil pour briser les roches".

Que ce soit avec l'une ou l'autre de ces méthodes, leurs nuisances sont nombreuses, surtout quand il s'agit d'intervenir dans des environnements fragiles tel qu'en particulier en milieu urbain et industriel.

Depuis quelques années, une troisième méthode se développe en utilisant l'expansion de certains matériaux sous l'effet d'une réaction chimique ou d'un changement d'état, et qui en se dilatant, peuvent transmettre une pression d'éclatement à un matériau dur et cassant, dans lequel il peut être injecté : le meilleur exemple est celui de la fracture des roches naturelles, sous l'effet du gel des eaux d'infiltration.

Le principal composant expansif utilisé d'une manière qui se veut contrôlable dans des plages de température courantes est la chaux vive, qui par hydratation, peut développer des forces de dilatation importantes : cependant, sa réaction d'hydratation est très rapide, abaisse la fluidité du mélange, qui est alors difficile à mettre en oeuvre dans des forages, et même quand on y parvient, l'emballement de la réaction peut projeter le mélange hors du trou et ne permet donc pas une utilisation correcte. Aussi, pour permettre celle-ci, en limitant ces effets gênants et connus de la chaux vive utilisée seule, afin de retarder et de ralentir la réaction de l'eau sur la chaux vive, d'une part il a été proposé de rajouter à celle-ci des composants, tels que des agents réducteurs d'eau, et d'autre part celle-ci peut être réduite en poudre très fine et calcinée.

De nombreuses compositions ont été ainsi élaborées et essayées afin de trouver un bon compromis entre l'effet de dilatation souhaité, sa force de poussée effective, sa stabilité lors de la mise en oeuvre et sa réaction contrôlée et retardée, sans que celle-ci soit trop lente, et que sa préparation ne soit pas trop complexe et coûteuse.

Ainsi, on relève de nombreuses demandes de brevets sur différents agents ou compositions à base de chaux vive, mais utilisant des caractéristiques de préparation de celles-ci différentes, et des mélanges avec différents constituants : on peut citer par exemple la demande de brevet japonais 67059 de 1981, décrivant une composition de chaux vive, en poudre fortement calcinée avec une dimension de particules de plus de 10 microns, de la matière hydraulique et un agent modificateur; la calcination de la chaux dans cette invention demande deux à sept jours de préparation entre 1300 et 1600°C, ce qui est trop long et coûteux, et de plus, l'effet de dilatation obtenu avec ce mélange demande deux à trois jours, ce qui est également trop long.

On relève alors en 1982 et 1983 essentiellement, et à partir d'inventions protégées initialement au JAPON, de nombreuses demandes de brevets portant sur diverses compositions spécifiques, afin de maîtriser et d'obtenir l'effet de dilatation voulue dans une durée d'une journée maximum, tout en ayant une préparation de la chaux vive calcinée qui ne soit pas trop contraignante : par exemple, la demande de brevet FR. 2.517.988 DU 10 Décembre 1982 déposée sous priorité japonaise de la société DENKI KKKK décrit un agent de démolition constitué en proportion de leur poids de 30 à 90 parties de chaux vive, faiblement calcinée en poudre, de cristaux de moins de 10 microns, de préférence 5 microns, et de surface spécifique de 1000 à 5000 cm²/gramme pour 10 à 70 parties de matériau hydraulique, dont 0,15 à 15 de retardateur d'hydratation et 0,1 à 5 d'un agent réducteur d'eau.

Par ailleurs, on note la demande de brevet FR. 2.535.311 DU 27 Octobre 1983 de la société japonaise CENTRAL GLASS Cy sur une composition chimique comportant pour 100 parties de chaux vive, 1 à 20 parties de fluorure de calcium, et en complément au moins 20 parties de matières auxiliaires telles que du CaSO₄; Al₂O₃, SiO₂, F₂O₃ et deux parties en agent réducteur d'eau.

D'autres brevets revendiquent des compositions comprenant certains de ces mêmes constituants, mais avec des proportions différentes, des granulométries particulières et des composants spécifiques, dont la liste serait longue à établir, mais tous ces mélanges nécessitent dans tous les cas, pour augmenter leur surface spécifique en créant des défauts de surface, et retarder l'effet de captage de l'eau par la chaux vive, des opérations de calcination de celle-ci, plus ou moins longues et à plus ou moins haute température, puis des broyages et des tamisages pour obtenir des granulométries données, ainsi que des choix et des rajouts de constituants spécifiques : ces opérations sont fastidieuses et lourdes en terme de fabrication, et augmentent donc le prix de revient du ciment ou de l'agent expansif que l'on veut obtenir.

De plus, pour certains, l'effet de dilatation est de toutes façons soit trop rapide, soit trop lent, et de force insuffisante pour détruire tous les matériaux cassants qui nécessitent des pressions jusqu'à et au delà de 20 MPa.

Le problème posé est donc de pouvoir réaliser un agent de démolition utilisant les effets de dilatation des ciments expansifs pour casser des structures en matériaux cassants et/ou fragiles, grâce à des constituants qui sont mélangés entre eux sans préparation particulière, donc sans calcination, ni tamisage, ni broyage supplémentaire ou spécifique, et qui permettent malgré cela une expansion efficace pour créer une fissuration du matériau en quelques heures, avec une pression jusqu'à 20 et même 25 MPa.

Une solution au problème posé est un agent de démolition pour briser les structures en matériaux cassants par effet de gonflement, constitué d'un mélange comprenant au moins de la chaux vive en composant principal, et comme matière auxiliaire au moins de l'alumine, de la silice et du sulfate de calcium; en pourcentage de son poids final, ledit mélange suivant l'invention contient environ 60 à 80% de chaux et, suivant le cas, de 60 à 70%, dont au minimum 40% de chaux vive, 5 à 15% d'alumine Al₂O₃ amorphe, 3 à 10% de silice amorphe SiO₂, et moins de 15% de CaSO₄ ; dans certains cas, ce pourcentage de CaSO₄ peut être réduit à moins de 2% ; tous les composants dudit mélange peuvent être issus de matières premières disponibles en l'état, telles les cendres volantes issues de four de centrale thermique au charbon; de préférence, le sulfate de calcium est utilisé sous sa forme anhydrite.

Le résultat est un nouveau agent de démolition pour briser les structures naturelles et construites en matériau dur et cassant, notamment en béton. Cet agent de démolition répond parfaitement aux objectifs définis précédemment, sans avoir les inconvénients des agents de démolition ou ciment expansifs utilisés et connus à ce jour, ni ceux des autres méthodes de démolition cités en introduction.

En effet, l'utilisation d'agent de démolition suivant l'invention ne pose aucun problème d'environnement, à savoir aucun bruit, aucune vibration ni aucune projection, ni aucune pollution.

La mise en oeuvre du produit et du mélange nécessaire nécessite un matériel succinct et une main d'oeuvre peu qualifiée. En effet, cet agent de démolition est défini comme une poudre, ayant l'apparence d'un ciment et qui, malaxée avec de l'eau en proportion convenable, donne une pâte coulante. Cette pâte coulée dans des trous percés dans les matériaux, tel que par exemple la pierre, le béton, les constructions, la roche etc..., durcit, se dilate et exerce sur les parois des trous, une poussée suffisamment puissante pour provoquer la fissuration du matériau dur et sa fragmentation.

La fissuration est assez rapide, puisqu'elle peut intervenir au bout de quelques heures. Le temps au bout duquel cette fissuration intervient est variable et est fonction de plusieurs facteurs tel que la température du matériau, celle de l'eau, la nature de la structure à démolir, le diamètre de foration etc... Cet agent de démolition peut être qualifié de ciment expansif, correspondant à la troisième méthode énumérée précédemment.

Dans la catégorie des ciments expansifs, outre ceux permettant également de briser par dilatation le matériau, on trouve également différentes familles de formulation relatives à des compositions données, mais caractérisées par une dilatation faible. Ce phénomène de dilatation est mis en fait à profit, en ce cas, uniquement pour atténuer, voire supprimer le retrait du béton, tel qu'en particulier dans les applications de colmatage de puits de pétrole, des canalisations, de segments de canalisations, de remplissage de terrains, de sous-couches pour chemins et routes etc...

L'objectif de la présente invention ne se situe pas dans ce type d'applications, puisque l'on veut obtenir une dilatation plus importante, avec des pressions suffisantes pour casser le matériau environnant.

Comme nous l'avons vu dans les compositions relevant de cet objectif, la fabrication des ciments expansifs connus, nécessite des opérations supplémentaires de calcination de certains des constituants, de tamisage et de broyage, qui sont fastidieuses et coûteuses, alors que dans la présente invention, l'agent de démolition tel que défini, ne nécessite aucune opération de calcination spécifique des constituants, aucune opération de tamisage spécifique , ni aucune opération spécifique de broyage.

Dans la présente invention, les matières premières, à condition de contenir dans leur mélange les pourcentages de composants nécessaires dans le cadre des proportions indiquées peuvent en effet être utilisées telles quelles : en effet, dans les brevets précédemment cités, les granulométries des chaux doivent être soit inférieures à 10 microns et donc nécessitent des opérations de broyage, soit peuvent être supérieures à cette valeur, mais alors nécessitent une calcination à une température très élevée et durant une durée très longue ; alors que dans la présente invention, la granulométrie couvre une plage très large jusqu'à 160 microns, sans nécessiter de calcination, que ce soit pour les particules de ladite chaux vive, ou pour les composants de matières auxiliaires, qui peuvent être fournis en partie par du ciment alumineux, considéré ainsi comme une matière première.

Par ailleurs, une autre caractéristique de la présente invention propose notamment l'utilisation de cendres volantes, qui est un matériau bon marché, et qui désigne le résidu de cendres finement divisées, produites lors de la combustion de charbon, et que l'on peut donc considérer comme étant une matière première disponible et utilisée dans la présente invention en l'état : de préférence, il est sélectionné bien sûr des cendres volantes ayant une composition voisine de celle du mélange selon l'invention.

A défaut de pouvoir réaliser une sélection des cendres satisfaisante, leur substitution par des matières premières, autres et régulières, est possible, tel que par la chaux vive, le métakaolin, le gypse etc...

Dans un mode particulier de fabrication d'agent de démolition, lesdites cendres volantes sont issues de fours à charbon contenant du soufre, et qui sont ainsi sulfocalciques, contenant le sulfate de calcium CaSO₄, nécessaire à la composition de l'agent de démolition tel que défini précédemment et sous forme anhydrite, et également de la silice SiO₂ et de l'alumine Al₂O₃, l'ensemble desdites cendres volantes pouvant représenter 30 à 45% du mélange constituant l'agent de démolition.

Si un des autres composés que l'anhydrite CaSO₄ n'était pas en quantité suffisante dans lesdites cendres volantes, il est alors nécessaire de compléter ce pourcentage, de façon à obtenir les fourchettes de compositions telles que précédemment définies et ainsi les caractéristiques du mélange suivant l'invention.

Le sulfate de calcium CaSO₄ est un élément essentiel du mélange suivant l'invention, car il participe à la formation d'ettringite: il permet de réguler en partie la prise du ciment expansif en se combinant avec les aluminates actifs du mélange. Il participe aussi à l'action de destruction en produisant des hydrates gonflants.

Une autre grande différence avec les autres descriptions de brevets, précédemment cités dans la même famille d'agents de démolition, réside dans la nature des matières premières utilisées, leur qualité et leur proportion, afin d'obtenir les pourcentages de composants nécessaires minimum dans les fourchettes déjà citées précédemment.

Comme dans beaucoup d'autres mélanges, il faut pouvoir contrôler l'effet de la vitesse de la réaction, car plus la température du milieu ambiant peut être élevée, plus la réaction peut s'emballer, et au contraire, plus c'est froid, plus la réaction est ralentie. Dans ce dernier cas, un retardateur n'est pas nécessaire, mais si la température extérieure est trop élevée, dans le mélange constituant l'agent de démolition suivant l'invention, il peut être rajouté, parmi la matière auxiliaire, un retardateur en quantité de moins de 5% en poids de l'ensemble du mélange, tel que le carbonate de potassium du carbonate de sodium, du bicarbonate de soude, du bicarbonate de potassium, du silicofluorure de sodium, de la soude caustique, de l'acide citrique, de l'acide gluconique, du citrate de sodium ou de potassium, du tartrate de sodium ou de potassium et du gluconate de sodium ou de potassium.

Pour pouvoir également contrôler et maîtriser la vitesse et la durée de la réaction d'hydratation de la chaux vive, il peut être rajouté dans le mélange constituant l'agent de démolition, parmi la matière auxiliaire, un fluidifiant et/ou un réducteur d'eau, les deux caractéristiques pouvant être apportées par le même composant : en effet, il est nécessaire de pouvoir diminuer la quantité d'eau afin de pouvoir contrôler l'effet de réaction avec la chaux vive, mais en même temps, il peut être nécessaire de rajouter du fluidifiant pour obtenir une consistante donnée, afin de pouvoir verser l'ensemble du mélange dans les trous de foration réalisés dans le matériau; on réduit alors l'eau nécessaire à cette opération, grâce à l'action dudit fluidifiant ou réducteur d'eau : celui-ci peut être choisi parmi la mélamine, les lignosulfonates, les polyalkylarylsulfonates, les sulfonates de résine mélamine-formaldéhyde, les sulfonates de condensats polycycliques aromatiques, les produits modifiés des matières ci-dessus mentionnées, et leur mélange.

D'une manière préférentielle, ledit fluidifiant pourrait être en quantité égale à moins de 10% en poids de l'ensemble du mélange.

Le ciment est utilisé de préférence entre 5° et 35°C de température du matériau et de l'air environnant, car sinon au-dessus, le produit risque de s'expulser lui-même, malgré le retardateur, et au-dessous, la réaction risque de ne pas se produire.

Des trous de foration permettant la mise en oeuvre de tels mélanges sont, de préférence, supérieurs à 25 mm, et inférieurs à 45 mm. L'effet de pression obtenue par la dilatation dudit mélange dans le matériau environnant peut être alors jusqu'à une valeur de 25 mPa.

La présente invention permet donc d'obtenir un phénomène de dilatation élevé, mis à profit pour des buts de démolition, sans les inconvénients décrits précédemment, et permettant en particulier des démolitions en milieu urbain en toute sécurité.

Une autre application du mélange comprenant au moins de la chaux vive en composant principal comme matière auxiliaire, au moins de l'alumine, de la silice et du sulfate de calcium, est telle qu'elle est utilisée comme agent autobloquant de fixation de tout objet dans une structure, avec une composition dudit mélange qui contient suivant l'invention 60 à 80% de chaux, et suivant le cas, de 60 à 70%, 5 à 15% d'alumine Al₂O₃ amorphe, 3 à 10% de silice amorphe SiO₂ et moins de 15% de CaSO₄, préférentiellement sous forme anhydrite ; dans certains cas ce pourcentage de CaSO₄ peut être limité à moins de 2%.

On pourrait citer d'autres avantages de la présente invention, mais ceux cités ci-dessus en montrent déjà suffisamment pour en démontrer la nouveauté et l'intérêt par rapport aux agents de démolition connus à ce jour.

## Revendications

1. Agent de démolition pour briser les structures en matériaux cassants par effet de gonflement, constitué d'un mélange comprenant au moins de la chaux vive en composant principal, et comme matière auxiliaire au moins de l'alumine, de la silice et du sulfate de calcium, caractérisé en ce qu'en pourcentage du poids final du mélange obtenu, celui-ci contient environ 60 à 80% de chaux, dont les particules qui composent la chaux vive sont d'une granulométrie pouvant aller jusqu'à 160 microns, 5 à 15% d'alumine Al₂O₃ amorphe, 3 à 10% de silice amorphe SiO₂, et moins de 15% de CaSO₄,

2. Agent de démolition suivant la revendication 1, caractérisé en ce que tous les composants dudit mélange sont issus de matières premières disponibles en l'état, dont des cendres volantes issues de four de centrale thermique au charbon.

3. Agent de démolition suivant l'une quelconque des revendications 1 à 2, caractérisé en ce que les composants de matières auxiliaires sont fournis en partie par du ciment alumineux, dont la granulométrie peut atteindre 90 microns.

4. Agent de démolition suivant l'une quelconque des revendications 1 à 3, caractérisé en ce que parmi la matière auxiliaire, il est rajouté un retardateur.

5. Agent de démolition suivant l'une quelconque des revendications 1 à 4, caractérisé en ce que parmi la matière auxiliaire, il est rajouté un fluidifiant.

6. Agent de démolition suivant l'une quelconque des revendications 2 à 5, caractérisé en ce que lesdites cendres volantes issues de four à charbon contenant du soufre, sont sulfocalciques, contiennent donc le sulfate de calcium CaSO₄ nécessaire, de la silice SiO₂, et de l'alumine Al₂O₃, et représentent 30 à 45% du mélange.

7. Application d'un mélange comprenant au moins de la chaux vive en composant principal, et comme matière auxiliaire au moins de l'alumine, de la silice et du sulfate de calcium, caractérisée en ce qu'elle est utilisée comme agent de démolition pour briser les structures en matériaux cassants par effet de gonflement, avec une composition dudit mélange qui contient environ 60 à 80% de chaux, dont 40% au moins de chaux vive, dont les particules qui la composent sont d'une granulométrie pour aller jusqu'à 160 microns, 5 à 15% d'alumine Al₂O₃ amorphe, 3 à 10% de silice amorphe SiO₂ et moins de 15% de CaSO₄.

8. Application d'un mélange comprenant au moins de la chaux vive en composant principal et comme matière auxiliaire au moins de l'alumine, de la silice et du sulfate de calcium, caractérisée en ce qu'elle est utilisée comme agent autobloquant de fixation de tout objet dans une structure, avec une composition dudit mélange qui contient environ 60 à 80% de chaux dont ladite chaux vive, 5 à 15% d'alumine Al₂O₃ amorphe, 3 à 10% de silice amorphe SiO₂ et moins de 15% de sulfate de calcium CaSO₄.

## Claims

1. Demolition agent for breaking the structures made from brittle materials by inflating effect constituted by a mixture comprising at least quick lime as the main component, and as the auxiliary material, at least alumina, silica and calcium sulphate, the demolition agent being characterized in that, as the percentage of the final weight of the obtained mixture, said mixture contains about 60 to 80% of lime, whose particles composing the quick lime have a granulometry which may reach 160 microns, 5 to 15% amorphous aluminum oxide Al₂O₃, 3 to 10% amorphous silica SiO₂, and less than 15% of CaSO₄.

2. Demolition agent according to claim 1, characterized in that all of the components of said mixture come from raw materials which are available as such, among which flue-dust which comes from a furnace of a charcoal generating station.

3. Demolition agent according to any one of claims 1 to 2, characterized in that the components of auxiliary materials are partly provided by high-alumina cement whose granulometry may reach 90 microns.

4. Demolition agent according to any one of claims 1 to 3, characterized in that a retarder is added to the auxiliary material.

5. Demolition agent according to any one of claims 1 to 4, characterized in that a liquefier is added to the auxiliary material.

6. Demolition agent according to any one of claims 2 to 5, characterized in that said flue-dust coming from a charcoal furnace containing sulfur, is sulfocalcic, whereby it contains the necessary calcium sulphate CaSO4, some silica SiO2, and some alumina Al₂O₃ and it represents 30 to 45% of the mixture.

7. Application of a mixture comprising at least some quick lime as the main component, and as the auxiliary material, at least some alumina, some silica and some calcium sulphate, said application being characterized in that it is used as a demolition agent in order to break the structures of brittle materials by inflating effect, with a composition of said mixture containing about 60 to 80% of lime, of which 40% at least of quick lime whose particles have a granulometry reaching 160 microns, 5 to 15% amorphous alumina Al₂O₃, 3 to 10% amorphous silica SiO₂, and less than 15% of CaSO₄.

8. Application of a mixture comprising at least some quick lime as the main component, and as the auxiliary material, at least some alumina, some silica and some calcium sulphate, said application being characterized in that it is used as a self-locking agent for setting any object in a structure, with a composition of said mixture containing about 60 to 80% of lime among which is said quick lime, 5 to 15% amorphous alumina Al₂O₃, 3 to 10% amorphous silica SiO₂, and less than 15% of CaSO₄.

## Patentansprüche

1. Zertrümmerungsmittel zum Abbruch zerbrechlicher Materialstrukturen durch Expansionseffekt, das aus einem Wenigstens Ätzkalk als Hauptbestandteil und wenigstens Aluminiumoxid, Siliziumdioxid und Calciumsulfat als Hilfsmaterial aufweisenden Gemisch besteht,
dadurch gekennzeichnet,
daß in Prozent des Endgewichts des erhaltenen Gemisches dieses etwa 60 bis 80 % Kalk, wovon die den Ätzkalk bildenden Teilchen eine bis zu 160 µm gehen könnende Korngröße haben, 5 bis 15 % amorphes Aluminiumoxid Al₂O₃, 3 bis 10 % amorphes Siliziumdioxid SiO₂ und weniger als 15 % CaSO₄ enthält.

2. Zertrümmerungsmittel nach dem Anspruch 1, dadurch gekennzeichnet, daß alle Bestandteile des Gemisches von im Zustand verfügbaren Ausgangsstoffen stammen, wovon Flugaschen aus einem Wärmekraftwerk-Kohleofen abgeführt wurden.

3. Zertrümmerungsmittel nach irgendeinem der Ansprüche 1 und 2, dadurch gekennzeichnet, daß die Hilfsmaterialienbestandteile teilweise durch Tonerdezement geliefert werden, dessen Korngröße 90 µm erreichen kann.

4. Zertrümmerungsmittel nach irgendeinem der Ansprüche 1 bis 3, dadurch gekennzeichnet, daß unter dem Hilfsmaterial ein Verzögerer zugesetzt ist.

5. Zertrümmerungsmittel nach irgendeinem der Ansprüche 1 bis 4, dadurch gekennzeichnet, daß unter dem Hilfsmaterial ein Verflüssiger zugesetzt ist.

6. Zertrümmerungsmittel nach irgendeinem der Ansprüche 2 bis 5, dadurch gekennzeichnet, daß die aus einem Wärmekraftwerk-Kohleofen abgeführten, Schwefel enthaltenden Flugaschen schwefelcalciumhaltig sind, also das erforderliche Calciumsulfat CaSO₄, Siliziumdioxid SiO₂ und Aluminiumoxid Al₂O₃ enthalten und 30 bis 45 % des Gemisches bilden.

7. Verwendung eines Gemisches, das wenigstens Ätzkalk als Hauptbestandteil und wenigstens Aluminiumoxid, Siliziumdioxid und Calciumsulfat als Hilfsmaterial aufweist, dadurch gekennzeichnet, daß es als Zertrümmerungsmittel zum Anbruch zerbrechlicher Materialstrukturen durch Expansionseffekt mit einer Zusammensetzung des Gemisches verwendet wird, die etwa 60 bis 80 % Kalk, davon wenigstens 40 % Ätzkalk, dessen diesen bildenden Teilchen eine bis zu 160 µm gehen könnende Korngröße haben, 5 bis 15 % amorphes Aluminiumoxid Al₂O₃, 3 bis 10 % amorphes Siliziumdioxid SiO₂ und weniger als 15 % CaSO₄ enthält.

8. Verwendung eines Gemisches, das wenigstens Ätzkalk als Hauptbestandteil und wenigstens Aluminiumoxid, Siliziumdioxid und Calciumsulfat als Hilfsmaterial aufweist, dadurch gekennzeichnet, daß es als selbstsicherndes Befestigungsmittel jedes Gegenstands in einer Struktur mit einer Zusammensetzung des Gemisches verwendet wird, die etwa 60 bis 80 % Kalk, darunter Ätzkalk, 5 bis 15 % amorphes Aluminiumoxid Al₂O₃, 3 bis 10 % amorphes Siliziumdioxid und weniger als 15 % Calciumsulfat CaSO₄ enthält.
